# EUROPÄISCHE PATENTSCHRIFT

(11) **EP 0 281 982 B1**
(45) Veröffentlichungstag und Bekanntmachung des Hinweises auf die Patenterteilung: **04.08.1993**
(21) Anmeldenummer: 88103468.0
(22) Anmeldetag: 05.03.1988
(51) Int. Cl.: A47B 47/03, E04B 1/61, F25D 23/06, E06B 3/26, F16B 5/02

(54) **Wandelement zum Einsetzen in die Seitenöffnungen eines aus Profilstangen aufgebauten Gehäuserahmens**
Wall element to be mounted in the side openings of a housing frame made from profiles
Elément de mur à monter dans les ouvertures latérales d'un cadre de boîtier réalisé à partir de profilés

(30) Priorität: 12.03.1987 DE 3707916
(43) Veröffentlichungstag der Anmeldung: 14.09.1988
(73) Patentinhaber: Fischbach GmbH & Co.KG Verwaltungsgesellschaft, D-57290 Neunkirchen (DE)
(72) Erfinder: Berscheid, Alfred, D-5561 Niederkail (DE); Buerger, Willy, Dipl.-Ing.,, D-5221 Friesenhagen (DE); Gies, Robert, D-5500 Trier (DE)
(74) Vertreter: Boecker, Joachim, Dr.-Ing.

(56) Entgegenhaltungen:
- WO-A-80/00264
- CH-A- 662 166
- DE-A- 2 731 328
- DE-A- 3 120 076
- DE-U- 7 508 449
- US-A- 3 327 447
- US-A- 3 392 497

## Beschreibung

Die Erfindung betrifft ein Wandelement zum Einsetzen in die Seitenöffnungen eines aus Profilstangen aufgebauten Gehäuserahmens. Eine solches Wandelement ist im wesentlichen bekannt aus dem DE-U-7508449.

Bei dem bekannten Wandelement stehen die Verriegelungsmechanismen, mit denen das Wandelement mit dem Gehäuserahmen verbunden wird, aus der zum Gehäuseinneren gerichteten Seite des Wandelements hervor, was häufig nachteilig ist. Aus Gründen der Sauberhaltung und der Hygiene, insbesondere im medizinischen Bereich, besteht der Wunsch nach ebenen Innenwänden der aus den Wandelementen aufgebauten Gehäuse. Auch strömungstechnisch können sich die vorstehenden Verriegelungsmechanismen nachteilig auswirken, wenn die Gehäuse als Kanäle für ein strömendes Gas verwendet werden. Ein weiterer Nachteil des bekannten Wandelements besteht darin, daß die inneren und äußeren Wandplatten des Wandelementes an ihren Rändern abgewinkelt werden müssen, wodurch der Herstellungsaufwand groß ist.

Ferner ist es häufig wichtig, eine möglichst gute thermische und/oder akustische Isolierung der Innenräume der Gehäuse von der Umgebung zu erzielen. Bei den bekannten Wandelementen sind wärme- und schallübertragende Brücken vorhanden, die von den Verriegelungsmechanismen und häufig auch durch direkten Kontakt zwischen den Innen- und Außenblechen der Wandelemente gebildet werden.

Aus der US-A-3 392 497 ist ein System aus zusammenfügbaren Wandelementen zum Aufbau von kleineren begehbaren Räumen, wie zum Beispiel Kühlräumen, bekannt. Die Wandelemente bestehen aus vier rechteckig zueinander angeordneten Profilstangen, die an den Ecken, in denen sie zusammenlaufen, über zusätzliche Verbindungsglieder miteinander verbunden sind. Diese Verbindungsglieder bilden einen Teil des entstehenden geschlossenen Rahmens der Wandelemente. Der Raum innerhalb dieses Rahmens ist mit Isoliermaterial ausgefüllt und mit Deckplatten auf der Innen- und Außenseite abgedeckt. Die Wandelemente sind die tragenden Elemente des zu errichtenden Gebäudes. Sie werden unmittelbar miteinander verbunden. Ein zusätzliches tragendes Profilstangengerüst, in welches die Wandelemente eingefügt werden, ist nicht vorhanden. Zur Verbindung sind Verriegelungsmechanismen vorgesehen, die in den Wandelementen integriert sind und nicht aus den Seitenflächen der Wandelemente herausragen. Diese Verriegelungsmechanismen sind in zusätzlichen kleinen Gehäusen untergebracht, die in der Isoliermasse der Wandelemente eingelassen sind und sich an den Schmalseiten der Wandelemente nach außen gegen die Profilstangen abstützen. Die Verriegelungsmechanismen sind so beschaffen, daß die aneinander grenzenden Wandelemente mit ihren schmalen Kantenseiten fest aneinander ziehen.

Der Erfindung liegt die Aufgabe zugrunde, ein Wandelement der eingangs genannten Art zu entwickeln, welches auf der Gehäuseinnenseite durchgehend ebene Flächen aufweist und welches einfach herstellbar ist. Ferner soll das Wandelement so beschaffen sein, daß möglichst keine gut wärmeleitenden oder schalleitenden Verbindungen zwischen Außen- und Innenseite des Wandelements vorhanden sind.

Zur Lösung dieser Aufgabe wird ein Wandelement gemäß dem Oberbegriff des Anspruches 1 vorgeschlagen, welches erfindungsgemäß die im kennzeichnenden Teil des Anspruches 1 genannten Merkmale hat.

Vorteilhafte Ausgestaltungen der Erfindung sind in den weiteren Ansprüchen genannt.

Anhand der in den Figuren gezeigten Ausführungsbeispiele soll die Erfindung näher erläutert werden. Es zeigen
- Figur 1: eine Eckausschnitt eines Gehäuses, welches mit Wandelementen gemäß der Erfindung aufgebaut ist, in perspektivischer Darstellung,
- Figur 2: eine Draufsicht auf den Ausschnitt gemäß Figur 1,
- Figur 3: in perspektivischer Darstellung einen Ausschnitt im Schnitt längs der Linie A-A in Figur 1 an einer Stelle, an der ein Verriegelungsmechanismus angeordnet ist,
- Figur 4: den Querschnitt eines ersten Ausführungsbeispiels einer Profilstange für ein Wandelement gemäß der Erfindung,
- Figur 5: den Querschnitt eines zweites Ausführungsbeispiels einer Profilstange für ein Wandelement gemäß der Erfindung,
- Figur 6a und 6b: ein Ausführungsbeispiel für die Antriebswelle eines Verriegelungsmechanismus, in Seitenansicht und Draufsicht,
- Figur 7a und 7b: ein Ausführungsbeispiel für einen kuppelbaren Handgriff für einen Verriegelungsmechanismus in Seitenansicht und Draufsicht.

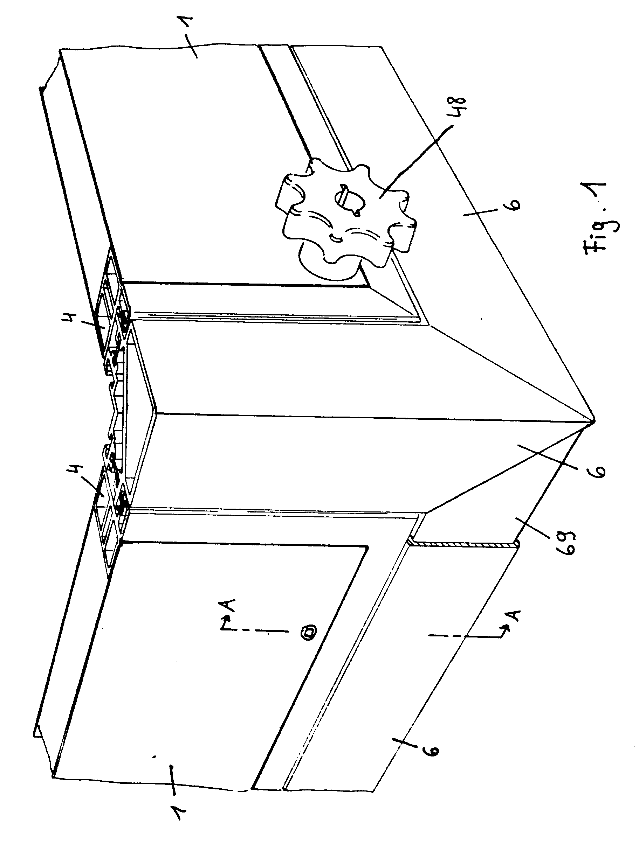

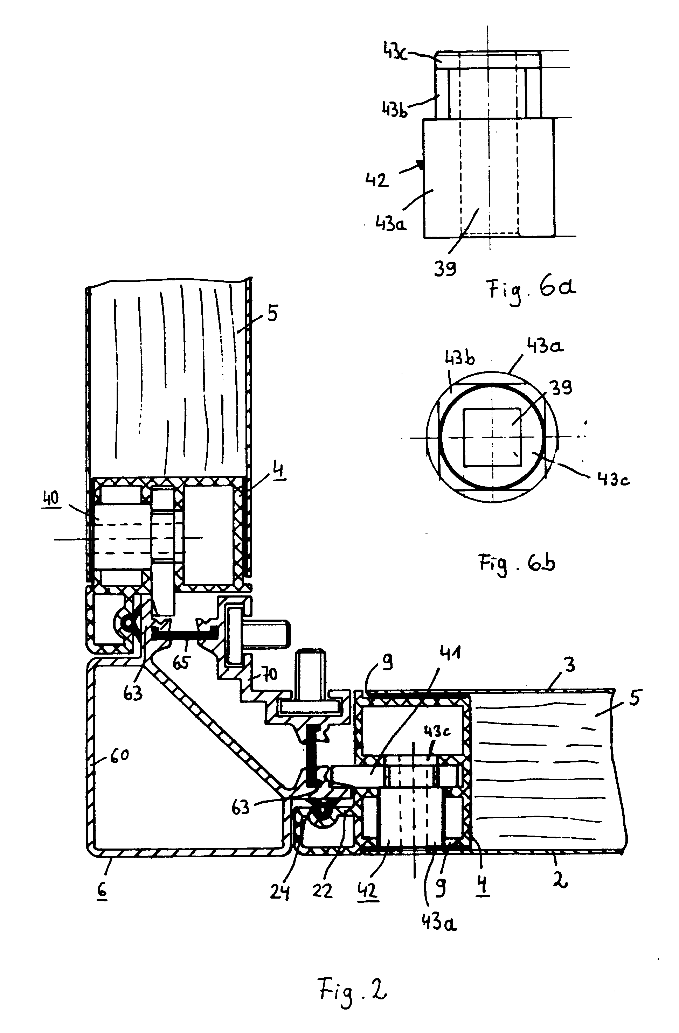

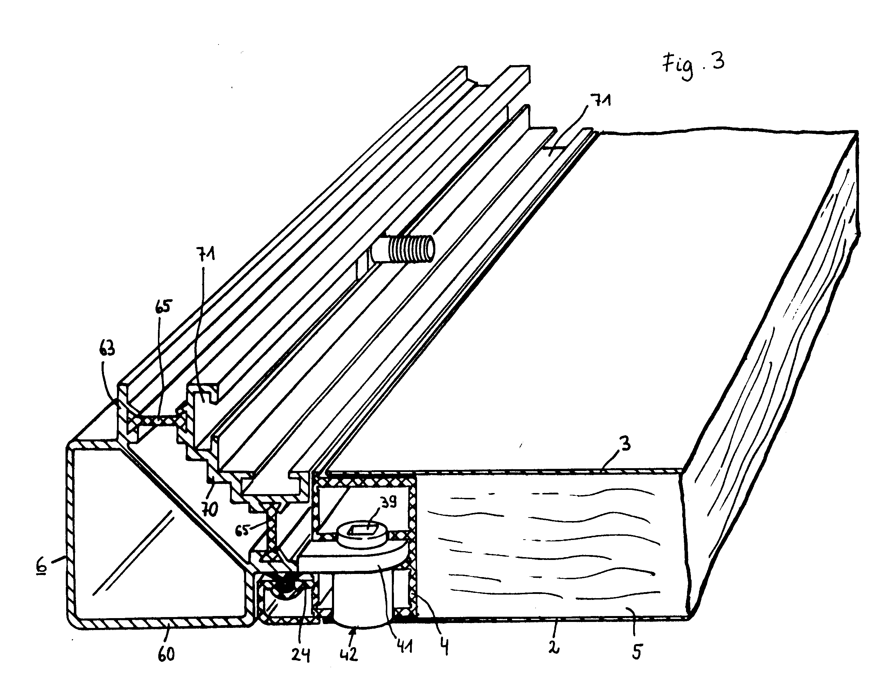

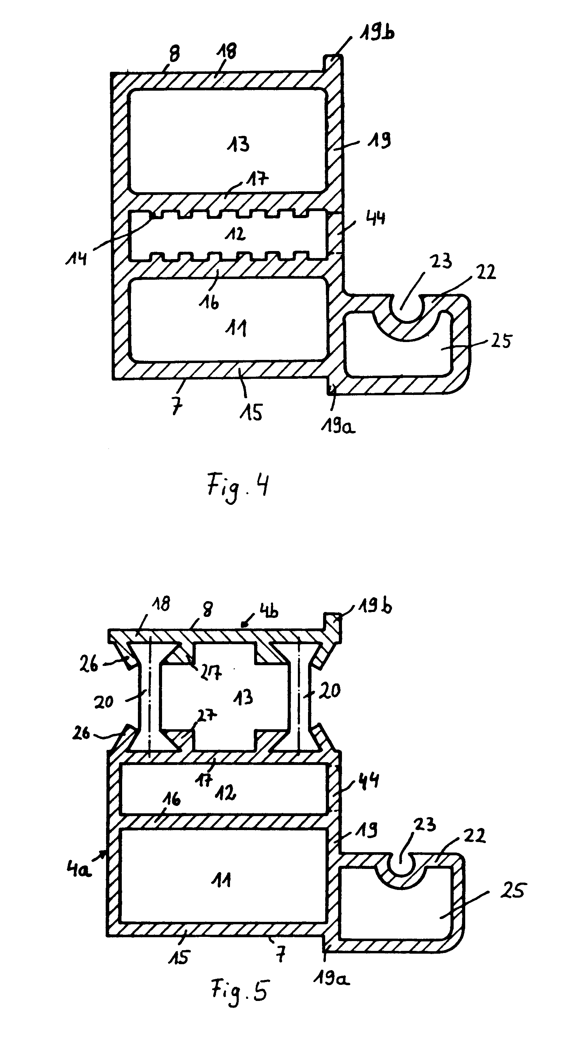

Figur 1 zeigt eine Ecke eines würfel- oder quaderförmigen Gehäuses, welches mit Wandelementen gemäß der Erfindung aufgebaut ist. Der Gehäuserahmen besteht aus Gehäuserahmen-Profilstangen 6, von denen in jeder Ecke drei auf Gehrung abgeschnittene Gehäuserahmen-Profilstangen zusammenlaufen. Diese werden zusammengehalten durch ein Eckstück 69, von welchem drei rechtwinklig zueinander angeordnete Stutzen ausgehen, auf welche die Gehäuserahmen-Profilstangen 6 aufgeschoben sind. Die Verbindung zwischen Profilstange und Eckstück kann beispielsweise durch Kleben, Schrauben oder Nieten erfolgen. Jede Gehäuserahmen-Profilstange ist mit zwei rechtwinklig zueinander angeordneten hintergreifbaren Anlageflanschen 63 (siehe Figuren 2 und 3) versehen, die im zusammengesteckten Gehäuserahmen in jeder Seitenöffnung des Gehäuses einen umlaufenden Anlageflansch bilden, gegen welchen ein Wandelement mit einem entsprechenden Anlageflansch 22 anliegt.

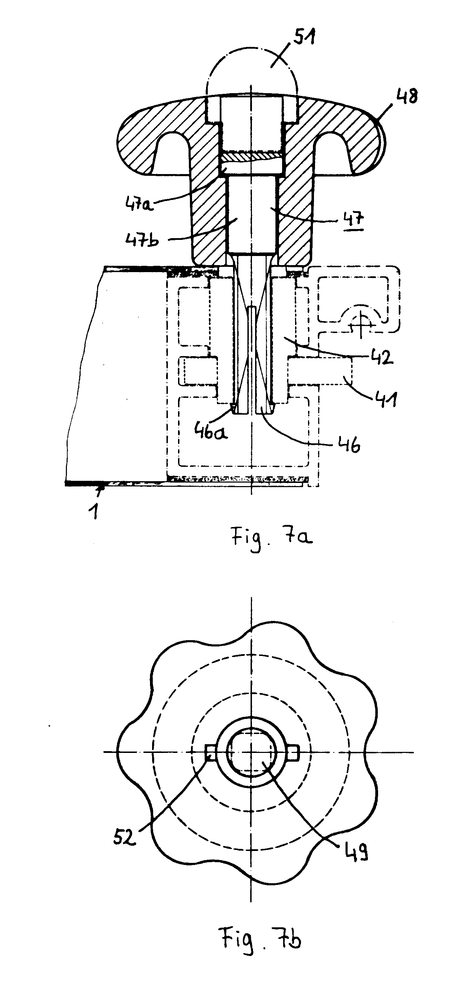

Ein Wandelement ist aufgebaut aus vier Profilstangen 4, die auf Gehrung geschnitten zu einem quadratischen oder rechteckförmigen Rahmen aneinandergelegt sind. Die Außenwand 15 und Innenwand 18 (Figur 4) der Profilstange weisen ebene Oberflächen 7 beziehungsweise 8 auf, auf denen die Außenplatte 2 und die Innenplatte 3, die beispielsweise aus Aluminiumblech bestehen, mittels eines doppelseitigen Klebebandes 9 aufgeklebt sind. Das Klebeband 9 besteht vorzugsweise aus einem elastischen Kunststoffmaterial und hat eine gewisse Dicke von beispielsweise 0,8 mm, so daß dank der elastischen Verformbarkeit dieser Klebebandschicht Wärmespannungen zwischen den verschiedenen Teilen des Wandelementes ausgeglichen werden können.

Die Verbindung zwischen den vier Profilstangen kann ausschließlich durch diesen Klebverband hergestellt sein. Bei großen und/oder stark belasteten Wandelementen können jedoch zusätzlich metallische Winkel an den Verbindungsstellen zwischen aneinander grenzenden Profilstangen im Inneren derselben angeordnet sein.

Der Raum zwischen den beiden Platten 2 und 3 ist mit Isoliermaterial 5, beispielsweise Mineralfaserwolle, ausgefüllt.

Figur 4 zeigt ein Ausführungsbeispiel einer Profilstange für ein Wandelement im Querschnitt. Das Hohlprofil enthält zwei Zwischenwände 16,17, so daß drei Kammern 11,12,13 gebildet werden. Man erkennt die beiden ebenen Flächen 7 beziehungsweise 8, an welchen die Außenplatte 2 beziehungsweise die Innenplatte 3 festgeklebt werden. Die Profilstangenwand 19, welche die schmale Außenseite des Wandelementes bildet, ist an ihren beiden Enden mit einem Vorsprung 19a,19b versehen, der eine Anschlagkante für die aufzuklebenden Platten 2 und 3 bilden und die Justierung der Platten beim Klebevorgang erleichtern. Der Anlageflansch 22 wird von einem rechtwinklig aus der Profilstangenwand 19 hervorstehenden, Profilteil gebildet, das im gezeigten Ausführungsbeispiel als geschlossene Kammer 25 ausgebildet ist, wodurch einerseits der Anlageflansch 22 mechanisch versteift wird und andererseits eine vollständig ebene Außenfläche des Wandelements erreicht wird. Im Prinzip genügt als Anlageflansch jedoch eine einfache aus der Profilstangenwand 19 hervortretende Wand. Der Anlageflansch 22 ist mit einer Nut 23 zur Aufnahme einer Dichtung 24 versehen. Diese Dichtung ist vorzugsweise als hochwirksame Gummidoppellippendichtung ausgebildet, die sowohl bei Unterdruck wie auch bei Überdruck im Inneren des Gehäuses stets zuverlässig dichtet.

Der Verriegelungsmechanismus 40 zur Befestigung des Wandelements am Gehäuserahmen besteht aus einem Verschlußriegel 41 und einer Antriebswelle 42 zur Drehung des Verschlußriegels. Die Zwischenwände 16 und 17 der Profilstange 4 sind so positioniert, daß der plattenförmige Verschlußriegel 41 zwischen den langen Seitenwänden der Kammer 12 geführt wird und von diesen in seiner Lage senkrecht zur Ebene des Wandelements festgelegt wird. Um gute Führungsflächen für den Verschlußriegel 41 zu erhalten, sind die beiden langen Wände der Innenkammer 12 mit vorstehenden Stegen 14 versehen, die beim Fräsen des Schlitzes 44 ebenfalls auf das exakte Maß für den Verschlußriegel abgefräst werden.

Diese Stege dienen auch zur guten Verankerung der oben genannten eventuell verwendeten Versteifung an den Verbindungsstellen benachbarter Profilstangen, wobei die Versteifungswinkel in die Kammern 12 der Profilstangen eingesetzt werden.

Die im Ausführungsbeispiel verwendete Antriebswelle 42 für den Verschlußriegel besteht aus einem ersten zylindrischen Abschnitt 43a (Figur 6a und 6b), einem Mitnehmerprofilteil 43b und einem zweiten zylindrischen Abschnitt 43c. Das Mitnehmerprofilteil ist als Vierkant ausgebildet und paßt in ein entsprechendes Vierkantloch im Verschlußriegel 41. Die Antriebswelle ist mit ihrem ersten zylindrischen Abschnitt 43a in entsprechenden Löchern in der Außenwand 15 und der Zwischenwand 16 gelagert und mit dem zweiten zylindrischen Abschnitt 43b in der zweiten Zwischenwand 17.

Die Montage des Verriegelungsmechanismus 40 erfolgt in der Weise, daß ein kurzer Schlitz 44 (Figur 4) in die Profilstangenwand 19 eingefräst wird, durch welchen der Verschlußriegel von der schmalen Seite des Wandelements aus in die Kammer 12 eingeschoben wird. Anschließend wird die Antriebswelle von der Vorderseite des Wandelements in die in Figur 3 gezeigte Position geschoben wird. Ein Herausfallen der Antriebswelle wird durch die Außenplatte 2 verhindert. Die Antriebswelle ist mit einem vorzugsweise als Vierkant ausgebildeten achsialen Loch oder durchgehenden Kanal 39 versehen, so daß durch Einstecken eines Vierkantschlüssels von außen durch eine Öffnung in der Außenplatte 2 der Verschlußriegel gedreht werden kann, so daß dieser durch den Schlitz 44 in der Profilstange aus dieser herausschwenkt und sich hinter den Anlageflansch 63 der Gehäuserahmen-Profilstange schiebt und das Wandelement mit seiner Dichtung fest gegen den Anlageflansch 63 der Gehäuserahmen-Profilstange andrückt.

Zur Erzielung eines hohen Wärmedurchtrittswiderstandes senkrecht zur Ebene des Wandelementes können die Profilstangen des Wandelements aus schlecht wärmeleitendem Kunststoff, der vorzugsweise glasfaserverstärkt ist, bestehen.

Figur 5 zeigt im Querschnitt die mögliche Ausbildung einer Profilstange für den Fall, daß diese aus Metall bestehen soll, die Wärmeleitfähigkeit senkrecht zur Ebene des Wandelements jedoch gering sein soll. Die Profilstange besteht in diesem Falle aus zwei Profilstangenteilen 4a und 4b, von denen das erste Teil die beiden Kammern 11 und 12 für die Aufnahme der Verriegelungsmechanismen bildet. Das zweite Profilstangenteil ist ein im wesentlichen ebenes Wandteil 18, welches mit dem ersten Teil über zwei Isolierstegwände 20 verbunden ist. Die Isolierstegwände sind an ihren Enden schwalbenschwanzförmig ausgebildet. Eine andere Möglichkeit ihrer Ausbildung besteht darin, sie an ihren Enden abzuwinkeln, wie dies in Figur 2 für die Isolierstegwände 65 der Gehäuserahmen-Profilstange dargestellt ist.

An den durch die Isolierstegwände verbundenen Seiten der beiden Profilstangenteile sind entsprechend geformte Vorsprünge 26,27 zur Aufnahme der Isolierstegwände vorhanden. Der relativ schmale Vorsprung 26 ist bei den stranggepreßten Profilstangenteilen zunächst weniger stark abgewinkelt und wird nach dem Einsetzen der Isolierstegwände gegen die Isolierstegwände gedrückt, wodurch eine starre und feste Verbindung erreicht wird.

Zur Betätigung der Verriegelungsmechanismen kann anstelle eines Vierkantschlüssels auch ein permanent montiertes Betätigungsglied 45 vorgesehen werden, wie es in den Figuren 7a und 7b dargestellt ist. Dieses Betätigungsglied besteht aus einer Achse 47, deren eines Ende als geschlitzter Vierkant 46 ausgebildet ist, an dessen Spitze Rastnocken 46a vorhanden sind. Dieser Vierkant wird in das Vierkantloch 39 der Antriebswelle 42 eingschoben und verrastet mit den Rastnocken 46a hinter der inneren Stirnseite der Antriebswelle 42, so daß das Betätigungsglied bei geschlossenem Gehäuse nicht wieder entfernt werden kann. Auf dem aus dem Wandelement herausragenden Teil der Achse 47 kann ein beispielsweise sternförmiger Handgriff 48 fest oder drehbar aufgesetzt sein. Im letztgenannten Falle ist der aus dem Wandelement herausragende Teil der Achse 47 aus zwei im Durchmesser unterschiedlichen zylindrischen Abschnitten 47a,47b aufgebaut, so daß der Handgriff 48 durch seinen entsprechend ausgebildeten Bohrungsabschnitt mit dem kleinerem Durchmesser in achsialer Richtung fixiert wird. Eine Betätigung des Verschlußriegels 41 ist nur möglich, wenn der Handgriff 48 mit der Achse 47 in Drehrichtung gekuppelt wird. Zu diesem Zweck ist an der Stirnseite des oberen zylindrischen Abschnittes 47a ein Schlitz 49 vorhanden, und in dem oberen Teil der Bohrung im Handgriff 48 sind zwei in Achsrichtung verlaufende diametral gegenüberliegende Nuten 52 vorhanden. Durch Einstecken eines entsprechend geformten Flachschlüssels 51 in den Schlitz 49 und die Nuten 52 werden Handgriff 48 und Achse 47 in Drehrichtung miteinander gekuppelt, so daß eine Betätigung des Verriegelungsmechanismus möglich ist.

Die vorbeschriebenen Wandelemente können im Rahmen der Ansprüche in vielfacher Weise variiert werden. So kann beispielsweise bei dem Profil gemäß Figur 4 die Kammer 13 fehlen und die Zwischenwand 17 die Funktion der zur Innenseite des Gehäuses gerichteten Außenwand 18 übernehmen. Ein Herausragen des zylindrischen Abschnitts 43c der Antriebswelle 42 aus der Zwischenwand 17 ist nicht erforderlich. Auch kann der zweite zylindrische Abschnitt 43c der Antriebswelle 42 des Verriegelungsmechanismus 40 ganz entfallen.

Die Dicke eines Wandelementes kann beispielsweise 40 mm betragen, und die Spannweite bis zu 2 bis 3 Metern. Die Platten 2,3 haben beispielsweise eine Dicke von 1 mm.

Die Anzahl der pro Wandelement vorgesehenen Verriegelungsmechanismen hängt von der Größe des Wandelements und den Anforderungen an die Güte der Dichtung ab.

## Patentansprüche

1. Wandelement zum Einsetzen in die Seitenöffnungen eines aus Profilstangen aufgebauten Gehäuserahmens, bei welchem die Seitenöffnungen von einem umlaufenden, hintergreifbaren Anlageflansch für die Anlage des Wandelements (1) begrenzt sind, zu welchem Wandelement eine Außenplatte (2) und einer Innenplatte (3) gehören, die auf Abstand voneinander gehalten sind, wobei der Raum zwischen den beiden Platten (2,3) mit Isoliermaterial (5) ausgefüllt ist, und welches Wandelement an randnahen Stellen mit Verriegelungsmechanismen (40) versehen ist, mit denen das Wandelement mit dem Gehäuserahmen durch Hintergreifen eines zum Gehäuserahmen gehörenden Teils derart verbunden werden kann, daß das Wandelement durch eine senkrecht zur Ebene des Wandelements wirkende Kraft in der Seitenöffnung des Gehäuserahmens festgehalten wird, **dadurch gekennzeichnet**, daß das Wandelement (1) längs seines Umfanges aus Profilstangen (4) besteht, die unmittelbar, vorzugsweise auf Gehrung, aneinanderliegend einen geschlossenen Rahmen bilden und die an ihren zur Fläche des Wandelements parallelen Seiten ebene Flächen (7,8) aufweisen, daß die Außenplatte (2) und die Innenplatte (3), die beide eben ausgebildet sind, an den genannten ebenen Flächen (7,8) der Profilstangen (4) befestigt sind und daß die Verriegelungsmechanismen (40) innerhalb der Profilstangen (4) angeordnet sind und mit einem aus den Schmalseiten des Wandelements herausschwenkbaren Verschlußriegel (41) versehen sind.

2. Wandelement nach Anspruch 1, **dadurch gekennzeichnet**, daß die Befestigung der Außenplatte (2) und der Innenplatte (3) an den genannten ebenen Flächen (7,8) durch Kleben hergestellt ist.

3. Wandelement nach Anspruch 2, **dadurch gekennzeichnet**, daß der Klebverband von einem beidseitig klebenden Klebeband gebildet wird.

4. Wandelement nach einem der vorhergehenden Ansprüche, **dadurch gekennzeichnet**, daß die Profilstangen (4) als Hohlprofile mit mindestens zwei Richtung senkrecht zur Wandelementenebene liegenden Kammern (11,12,13) ausgebildet sind, daß die Verschlußriegel (41) in einer dieser Kammern (12) angeordnet sind und daß in der diese Kammer (12) begrenzenden Außenwand (19) des Wandelements ein Schlitz (44) für den Durchtritt des Verschlußriegels (41) vorhanden ist.

5. Wandelement nach einem der vorhergehenden Ansprüche, **dadurch gekennzeichnet**, daß die Profilstangen (4) aus Kunststoff bestehen und drei Kammern (11 bis 13) enthalten, und daß der Verschlußriegel (41) der Verriegelungsmechanismen in der mittleren Kammer (12) angeordnet ist und von einer Antriebswelle (42) getragen wird, die in den zur Ebene des Wandelements parallelen Wänden (16,15) der äußere Kammer (11) drehbar gelagert ist.

6. Wandelement nach einem der Ansprüche 1 bis 4, **dadurch gekennzeichnet**, daß die Profilstangen (4) aus einem ersten metallischen Profilstangenteil (4a) mit zwei Kammern (11,12) und einem im wesentlichen ebenen zweiten metallischen Profilstangenteil (4b) bestehen, welches die ebene Fläche (7) für die Befestigung der Innenplatte (3) bildet und über mindestens zwei Isolierstegwände (20) mit dem ersten Profilstangenteil (4a) verbunden ist.

7. Wandelement nach Anspruch 6, **dadurch gekennzeichnet**, daß die Isolierstegwände (20) an ihren Enden schwalbenschwanzförmig oder winkelförmig ausgebildet sind und die einander benachbarten Seiten der Profilstangenteile (4a,4b) mit entsprechend geformten Vorsprüngen (26,27) zur Aufnahme der Enden der Isolierstegwände versehen sind.

8. Wandelement nach einem der vorhergehenden Ansprüche, **dadurch gekennzeichnet**, daß die Fläche zur Anlage des Wandelements (1) an den Anlageflansch (63) des Gehäuserahmens von einem Anlageflansch (22) der Profilstange (4) gebildet wird, der an derjenigen Seitenwand (19) der Profilstange angeordnet ist, in welcher die Schlitze (44) für die Verschlußriegel (41) vorhanden sind, und der zwischen diesen Schlitzen (44) und der Außenwand (15) der Profilstange aus der genannten Seitenwand (19) hervortritt.

9. Wandelement nach Anspruch 8, **dadurch gekennzeichnet**, daß der Flansch (22) als geschlossene seitliche Kammer (25) der Profilstange ausgebildet ist.

10. Wandelement nach einem der Ansprüche 8 oder 9, **dadurch gekennzeichnet**, daß der Anlageflansch (22) mit einer Nut (23) für die Aufnahme eines Dichtungsstreifens (24) versehen ist.

11. Wandelement nach Anspruch 10, **dadurch gekennzeichnet**, daß der Dichtungsstreifen (24) zwei divergierende Lippen zur Erzielung einer druck- und saugfesten Dichtung hat.

12. Wandelement nach einem der vorhergehenden Ansprüche, **dadurch gekennzeichnet**, daß die die schmale Außenseite des Wandelements bildende Profilstangenwand (19) an einem oder an beiden Enden mit Vorsprüngen (19a,19b) zur Justierung der Lage der Außenplatte (2) und/oder der Innenplatte (3) versehen ist.

13. Wandelement nach einem der vorhergehenden Ansprüche, **dadurch gekennzeichnet**, daß die Antriebswelle (42) für den Verschlußriegel (41) mit einem geeigneten Mitnehmerprofil, vorzugsweise einem Vierkantprofil, versehen ist, mit welchem die Antriebswelle durch ein entsprechend geformtes Loch im Verschlußriegel (41) geführt ist, daß die Antriebswelle zumindest in entsprechenden Löchern der die Außenkammer (11) bildenden Profilstangenwände (15,16) gelagert ist und daß die Breite der den Verschlußriegel (41) aufnehmenden Kammer (12) senkrecht zur Ebene des Wandelements so bemessen ist, daß der Verschlußriegel (41) praktisch spielfrei zwischen den Wänden (16,17) dieser Kammer geführt wird.

14. Wandelement nach Anspruch 13, **dadurch gekennzeichnet**, daß die Antriebswelle (42) zusätzlich mit einem zylindrischen Endzapfen (43c) in der zur Innenseite des Wandelements liegenden Profilstangenwand (17) gelagert ist.

15. Wandelement nach einem der Ansprüche 13 oder 14, **dadurch gekennzeichnet**, daß die Antriebswelle (42) zumindest an ihrem nach außen weisenden Ende mit einem achsparallelen Profilloch (39), vorzugsweise einem Vierkantloch, versehen ist und daß die Außenplatte (2) mit einem Loch versehen ist, welches das genannten Profilloch von außen freigibt.

16. Wandelement nach einem der vorhergehenden Ansprüche, **dadurch gekennzeichnet**, daß in das Profilloch (39) der Antriebswelle ein Handgriff (45) mit einem entsprechenden Profilstab (46) fest eingesetzt ist, daß dieser Profilstab das eine Ende einer Achse (47) bildet, deren anderes Ende (47a,47b) zylindrisch ausgebildet ist und einen frei drehbaren, in achsialer Richtung fixierten Handgriff (48) trägt und daß die Achse (47) an ihrer äußeren Stirnfläche mit einem Schlitz (49) und die Bohrung des Handgriffs zumindest an ihrem äußeren Ende mit einer oder zwei einander diametral gegenüberliegenden Nuten (52) zum Einstecken eines den Handgriff (48) an die Welle (47) drehkoppelnden Schlüssels (51) versehen sind.

17. Wandelement nach einem der vorhergehenden Ansprüche, **dadurch gekennzeichnet**, daß die Profilstangen (4) beziehungsweise die Profilstangenteil (4a,4b,20), aus denen die Profilstangen zusammengesetzt sind, durch Stranpressen hergestellt sind.

18. Aus Wandelementen nach einem der Ansprüche 1 bis 17 aufgebautes Gehäuse, **dadurch gekennzeichnet**, daß der Gehäuserahmen aus Profilstangen (6) aufgebaut ist, die aus zwei durch Isolierstegwänden (65) getrennte metallische Profilstangenteile (60,70) aufgebaut sind, wobei das Profilstangenteil (70) mit zwei rechtwinklig zueinander angeordneten Verschiebenuten (71) versehen ist, und daß die gegenseitigen Abmessungen von Wandelementen und Rahmenprofilstangen (6) derart einander angepaßt sind, daß das Gehäuse innen und außen ebene Wände bildet.

## Claims

1. Wall element to be mounted in the side openings of a housing frame made of profile bars, which side opening are de-limited by a surrounding abutment flange for the abutment of the wall element (1) which comprises an outer plate (2) and an inner plate (3) spaced apart from each other with the space between the two plates (2, 3) being filled with insulating material (5), and which wall element is provided at locations near the edge with locking mechanisms (40) which allow the fixing of the wall element to the housing frame by engaging behind a part of the abutment flange in such a way that the wall element is retained in the side opening by a force acting perpendicular to the plane of the wall element, **characterized**
- in that said wall element (1) consists along its circumference of profile bars (4), which directly contact one another, preferably by mitre joint, to form a closed frame and which exhibit plane surfaces (7, 8) on their sides which are parallel to the surface of the wall element,
- that the outer plate (2) and the inner plate (3), both of which are plane, are fixed to said plane surfaces (7, 8) of the profile bars (4),
- and that the locking mechanisms (40) are arranged inside the profile bars (4) and are provided with a locking latch (41) adapted to be slewed out through the narrow side (edge) from within the wall element.

2. Wall element according to claim 1, **characterized** in that the attachment of the outer plate (2) and the inner plate (3) to that plane surfaces (7, 8) is made by glueing.

3. Wall element according to claim 2, **characterized** in that the glueing connection is obtained by an adhesive tape with glueing properties on both sides.

4. Wall element according to any of the preceding claims, **characterized** in that the profile bars (4) consist of hollow profiles with at least two chambers (11, 12, 13) extending perpendicular to the plane of the wall element, that the locking latches (41) are arranged in these chambers (12) and that the wall element's outer wall (19) which delimits said chamber (12) is provided with a slit (44) for the passage of that locking latch (41).

5. Wall element according to any of the preceding claims, **characterized** in that the profile bars (4) are made of plastic and comprise three chambers (11 to 13) and that the locking latch (41) of the locking mechanism is arranged in the central chamber (12) and carried by a drive shaft (42) which is journalled in the walls (16, 15) of the outer chamber (11).

6. Wall element according to any of claims 1 to 4, **characterized** in that the profile bar (4) consist of a first metallic profile bar portion (4a) with two chambers (11, 12) and a substantially plane second metallic profile bar portion (4b), which forms the plane surface (7) for the attachment of the inner plate (3) and which is connected to the first profile bar portion (4a) by means of at least two insulating web walls (20).

7. Wall element according to claim 6, **characterized** in that said insulating web walls (20) are shaped at their ends as dove tails or as angles and that the opposing sides of the profile bar portions (4a, 4b) are provided with corresponding projections (26, 27) to accommodate the ends of the insulating web walls.

8. Wall element according to any of the preceding claims, **characterized** in that the surface of the wall element (1) which surface abuts against the abutment flange (63) of the housing frame is formed by an abutment flange (22) of the profile bar (4) which is located on that side wall (19) of the profile bar on which are arranged the slits (44) for the locking latch (41) and which abutment flange (22) projects from said side wall (19) between that slits (44) and the outer wall (15) of the profile bar.

9. Wall element according to claim 8, **characterized** in that said flange (22) is formed as a closed lateral chamber (25) of the profile bar.

10. Wall element according to claim 8 or 9, **characterized** in that the abutment flange (22) is provided with a slot (23) for accommodating a sealing strip (24).

11. Wall element according to claim 10, **characterized** in that the sealing strip (24) is provided with two diverging lips to bring about a pressure-proof and suction-proof sealing.

12. Wall element according to any of the preceding claims, **characterized** in that the wall (19) of the profile bar, which wall forms the narrow outer side of the wall element, is provided on one or both its ends with projections (19a, 19b) for adjusting the position of the outer plate (2) and/or inner plate (3).

13. Wall element according to any of the preceding claims, **characterized** in that the driving shaft (42) for the locking latch (41) is provided with a suitable catch profile, preferably a square profile, with which the driving shaft is passed through a correspondingly shaped opening in the locking latch (41), that the driving shaft is journalled at least in corresponding holes in those walls (15, 16) of the profile bar which form the outer chamber (11), and that the width of the chamber (12) accommodating the locking latch (41) perpendicular to the plane of the wall element is dimensioned such that the locking latch (41) can be guided with substantially no clearance between the walls (16, 17) of this chamber.

14. Wall element according to claim 13, **characterized** in that said driving shaft (42) is additionally journalled by means of a cylindrical end trunnion in the wall (17) of the profile bar which faces towards the inner side of the wall element.

15. Wall element according to claim 13 or 14, **characterized** in that the driving shaft (42) is provided on at least its outwardly facing end with a profile hole (39), preferably a square hole, which extends parallel to the axis of the shaft, and that the outer plate (2) is provided with an opening which allows access to the profile hole from the outside.

16. Wall element according to any of the preceding claims, **characterized** in that a handle (45) with a corresponding profile bar (46) is fixedly inserted in said profile hole (39) of the driving shaft, that this profile bar forms one end of a rod (47) the other end (47a, 47b) of which is formed as a cylinder and carries a freely turnable handle (48) blocked in the axial direction, and that the rod (47) at its outer fore-part is provided with a slit (49) and the bore of the handle, at least at its outer end, is provided with one or two diametrically arranged slots (50) for the insertion of a key (51), which brings about a rotational coupling between the handle (48) and the shaft (47).

17. Wall element according to any of the preceding claims, **characterized** in that the profile bar (4) and/or the profile bar portions (4a, 4b, 20), of which the profile bars are composed, are manufactured by extrusion.

18. Housing constructed of wall elements according to any of the claims 1-17, **characterized** in that the housing frame is constructed of profile bars (6) which consist of two metallic profile bar portions (60, 70) separated by insulating web walls (65), that the profile bar portion (70) is provided with two sliding grooves (71) extending perpendicular to each other, and that the mutual dimensions of the wall elements and the profile bars (6) of the frame are adjusted to each other such that the housing exhibits even walls on the inside and on the outside.

## Revendications

1. Élément de paroi destiné à être monté dans des ouvertures latérales d'un cadre d'une enceinte, constitué par des barres profilées, et dans lequel les ouvertures latérales sont limitées par une bride périphérique d'appui, qui peut s'engager en position arrière, pour l'application de l'élément de paroi (1), qui inclut une plaque extérieure (2) et une plaque intérieure (3), qui sont maintenues à distance, l'espace entre les deux plaques (2,3) étant rempli d'un matériau isolant (5), lequel élément de paroi est pourvu, au niveau d'emplacements proches du bord, de mécanismes de verrouillage (40), à l'aide desquels l'élément de paroi est relié au cadre de l'enceinte par engagement derrière un élément, qui fait partie du cadre de l'enceinte, derrière l'élément de paroi de sorte que ce dernier est maintenu fermement dans l'ouverture latérale du cadre du boîtier par une force agissant perpendiculairement au plan de l'élément de paroi, caractérisé par le fait que l'élément de paroi (1) est constitué, le long de sa périphérie, par des barres profilées (4), qui, en étant appliquées directement les unes contre les autres, de préférence selon une disposition à onglet, forment un cadre fermé, et qui possèdent des surfaces planes (7,8) sur leurs faces parallèles à la surface de l'élément de paroi, que la plaque extérieure (2) et la plaque intérieure (3), qui sont toutes deux planes, sont fixées sur lesdites surfaces planes (7,8) des barres profilées (4), et que les mécanismes de verrouillage (40) sont disposés à l'intérieur des barres profilées (4) et sont équipées d'un verrou de fermeture (41), qui peut être écarté par pivotement à partir des petits côtés de l'élément de paroi.

2. Élément de paroi suivant la revendication 1, caractérisé par le fait que la fixation de la plaque extérieure (2) et de la plaque intérieure (3) sur lesdites surfaces planes (7,8) est réalisée par collage.

3. Élément de paroi suivant la revendication 2, caractérisé par le fait que la liaison collée est établie au moyen d'une bande adhésive collante sur ses deux faces.

4. Élément de paroi suivant l'une des revendications précédentes, caractérisé en ce que les barres profilées (4) sont réalisées sous la forme de profilés creux comportant au moins deux chambres (11,12,13) qui s'étendent dans la direction perpendiculaire au plan de l'élément de paroi, que les verrous de fermeture (41) sont disposés dans l'une de ces chambres (12) et qu'une fente (44) pour le passage du verrou de fermeture (41) est prévue dans la paroi extérieure (19), qui limite cette chambre (12), de l'élément de paroi.

5. Élément de paroi suivant l'une des revendications précédentes, caractérisé par le fait que les barres profilées (4) sont réalisées en une matière plastique et comportant trois chambres (11 à 13), et que le verrou de fermeture (41) des mécanismes de verrouillage est disposé dans la chambre médiane (12) et est porté par un arbre d'entraînement (42), qui est monté rotatif dans les parois (16,17), qui sont parallèles au plan de l'élément de paroi, de la chambre extérieure (11).

6. Élément de paroi suivant l'une des revendications 1 à 4, caractérisé par le fait que les barres profilées (4) sont constituées par une première partie métallique (4a) comportant deux chambres (11,12) et par une seconde partie métallique (4b) sensiblement plane, qui forme la surface plane (7) pour la fixation de la plaque intérieure (3) et est raccordée à la première partie (4a) de la barre profilée par l'intermédiaire d'au moins deux parois en forme de barrettes isolantes (20).

7. Élément de paroi suivant la revendication 6, caractérisé par le fait que les parois en forme de barrettes isolantes (20) possèdent, au niveau de leurs extrémités, une forme en queue d'aronde ou une forme de cornière et que les côtés, qui sont voisins l'un de l'autre, des parties (4a,4b) de la barre profilée comportent des parties saillantes de forme correspondante (26,27) servant à recevoir les extrémités des parois en forme de barrettes isolantes.

8. Élément de paroi suivant l'une des revendications précédentes, caractérisé par le fait que la surface prévue pour l'application de l'élément de paroi (1) contre la bride d'appui (63) du cadre de l'enceinte est formée par une bride d'appui (22) de la barre profilée (4), qui est disposée sur la paroi latérale (19) de la barre profilée, dans laquelle sont ménagées les fentes (44) prévues pour les verrous de fermeture (40), et qui fait saillie entre ces fentes (44) et la paroi extérieure (15) de la barre profilée, à partir de ladite paroi latérale (19).

9. Élément de paroi suivant la revendication 8, caractérisé par le fait que la bride (22) est réalisée sous la forme d'une chambre latérale fermée (26) de la barre profilée.

10. Élément de paroi suivant l'une des revendications 8 ou 9, caractérisé par le fait que la bride d'appui (22) comporte une rainure (23) servant à loger une bande d'étanchéité (24).

11. Élément de paroi suivant la revendication 10, caractérisé par le fait que la bande d'étanchéité (24) possède deux lèvres divergentes permettant d'obtenir une étanchéité à la pression et à l'aspiration.

12. Élément de paroi suivant l'une des revendications précédentes, caractérisé par le fait que la paroi (19) de la barre profilée, qui forme le petit côté extérieur de l'élément de paroi, comporte, à une extrémité ou à ses deux extrémités, des parties saillantes (19a,19b) permettant d'ajuster la position de la plaque extérieure (2) et/ou de la plaque intérieure (3).

13. Élément de paroi suivant l'une des revendications précédentes, caractérisé par le fait que l'arbre d'entraînement (42) pour le verrou de fermeture (41) est pourvu d'un profilé d'entraînement approprié, de préférence un profilé de section carrée, au moyen duquel l'arbre d'entraînement est guidé dans un trou de forme correspondante ménagé dans le verrou de fermeture (41), que l'arbre d'entraînement est monté au moins dans les trous correspondants des parois (15,16) de la barre profilée, qui constitue une telle chambre extérieure (11) et que la largeur de la chambre (12), qui loge le verrou de fermeture (41) est dimensionnée perpendiculairement au plan de l'élément de paroi de telle sorte que le verrou de fermeture (42) est guidé pratiquement sans jeu entre les parois (16,17) de cette chambre.

14. Élément de paroi suivant la revendication 13, caractérisé par le fait que l'arbre d'entraînement (42) est monté en outre, au moyen d'un embout cylindrique d'extrémité (43c), dans la partie (17) de la barre profilée, qui est tournée vers le côté intérieur de l'élément de paroi.

15. Élément de paroi suivant l'une des revendications 13 ou 14, caractérisé par le fait que l'arbre d'entraînement (42) comporte, au moins sur son extrémité tournée vers l'extérieur, un trou profilé (39) parallèle à l'axe, de préférence un trou à section carrée, et que la plaque extérieure (2) comporte un trou, qui libère extérieurement ledit trou profilé.

16. Élément de paroi suivant l'une des revendications précédentes, caractérisé par le fait qu'une poignée (45) comportant une barre profilée correspondante (46) est insérée de façon fixe dans le trou profilé (32) de l'arbre d'entraînement, que cette barre profilée forme une extrémité d'un axe (47), dont l'autre extrémité (47a,47b) possède une forme cylindrique et porte une poignée (48) apte à tourner librement et fixée dans la direction axiale, et que l'arbre (47) comporte, au niveau de sa surface frontale extérieure, une fente (49), et le perçage de la poignée possède au moins sur son extrémité extérieure une ou deux rainures (50) diamétralement opposées, qui permettent l'enfichage d'une clé (51) accouplant en rotation la poignée (48) à l'arbre (47).

17. Élément de paroi suivant l'une des revendications précédentes, caractérisé par le fait que les barres profilées (4) ou la partie (4a,4b,20) des barres profilées, dont sont constituées les barres profilées, sont fabriquées par extrusion.

18. Boîtier constitué par des éléments de paroi suivant l'une des revendications 1 à 17, caractérisé par le fait que le cadre de l'enceinte est constitué par des barres profilées (6), qui sont formées par deux éléments métalliques (60,70), qui sont séparés par des parois formant barrettes isolantes (65), la partie (70) de la barre profilée comportant deux rainures de déplacement (71) perpendiculaires entre elles, et que les dimensions réciproques d'éléments de paroi et de barres profilées (6) du cadre sont adaptées entre elles de telle sorte que l'enceinte comporte extérieurement et intérieurement des parois planes.
